# EUROPÄISCHE PATENTSCHRIFT

(11) **EP 1 861 307 B1**
(45) Veröffentlichungstag und Bekanntmachung des Hinweises auf die Patenterteilung: **19.06.2013**
(21) Anmeldenummer: 07722914.4
(22) Anmeldetag: 23.02.2007
(51) Int. Cl.: B62K 25/08, F16F 9/02, F16F 9/04, F16F 9/56, B62K 21/08, B62K 21/20

(54) **FEDERWEGSVERSTELLUNG**
SPRING DEFLECTION ADJUSTMENT
AJUSTEMENT D'UN PARCOURS ELASTIQUE

(30) Priorität: 02.03.2006 DE 102006010245
(43) Veröffentlichungstag der Anmeldung: 05.12.2007
(73) Patentinhaber: Gustav Magenwirth GmbH & Co. KG, 72574 Bad Urach (DE)
(72) Erfinder: LÜDE, Dirk, 80798 München (DE); BEIER, Jürgen, 89081 Ulm (DE)
(74) Vertreter: Andrae, Steffen
(86) Internationale Anmeldenummer: PCT/EP2007/001601
(87) Internationale Veröffentlichungsnummer: WO 2007/098896

(56) Entgegenhaltungen:
- DE-A1- 10 252 711
- DE-A1- 19 956 321

## Beschreibung

Die Erfindung betrifft eine Feder- und/oder Dämpfervorrichtung insbesondere für Zweiräder, mit wenigstens einer Kolben-Zylinder-Anordnung, wobei durch den Kolben voneinander abgegrenzte Arbeitsräume als Kolbenraum und Kolbenstangenraum gebildet sind, welche mit einem Feder- oder Dämpfungsmedium gefüllt sind, wobei der Kolben mit einer Kolbenstange verbunden ist, die eine Stirnwandung des Kolbenstangenraums dichtend durchsetzt.

Als Antwort eines Fahrzeugs beziehungsweise seiner Räder auf die durch Bodenunebenheiten verursachten Stöße oder Schläge werden seit jeher Feder- und Dämpfungsvorrichtungen im Bereich der Radaufhängungen eingesetzt. Zwischenzeitlich hat diese Technik auch bei durch Muskelkraft betriebenen Fahrzeugen, wie beispielsweise Fahrrädern, Einzug gehalten, da hierdurch zum einen der allgemeine Fahrkomfort erheblich verbessert werden konnte, zum anderen, insbesondere beim Einsatz des Fahrzeuges als Sportgerät, Feder- und Dämpfungsvorrichtungen zur Bewältigung schwierigerer Geländeprofile unverzichtbar sind.

Neben dem Einsatz herkömmlicher Spiralfedern als Federvorrichtung finden daneben auch immer häufiger pneumatische Federn, wie sie etwa aus der DE 197 37 293 A1 bekannt sind, Verwendung. Sie bieten einen guten Federkomfort und reduzieren gegenüber den herkömmlichen Federn das Gesamtgewicht des Fahrzeugs zum Teil nicht unerheblich. Die erwähnten Federvorrichtungen sind dabei häufig mit Kolben-Zylinder-Anordnungen versehen, bei denen durch den Kolben die beiden Arbeitsräume der Vorrichtung gegeneinander abgegrenzt werden, wie es beispielsweise aus der DE 199 56 321 A1 bekannt ist.

Die vorstehend erwähnten Federvorrichtungen stellen für den Ein- und Ausfedervorgang einen bestimmten, durch den Druck des Systems vorgegebenen Federweg zur Verfügung, der sich in der Größenordnung von 100 mm bewegt, für spezielle Einsätze aber auch deutlich darüber liegen kann. Für den Benutzer eines mit einer solchen Federvorrichtung versehenen Fahrzeugs kann es unter Umständen notwendig oder wünschenswert sein, seine durch die Federvorrichtung vorgegebene Lage auf dem Fahrzeug kurzfristig zu verändern, um beispielsweise einen Anstieg des Geländes besser bewältigen zu können.

Es besteht daher die Aufgabe, eine Feder- und/oder Dämpfervorrichtung der eingangs genannten Art derart weiterzubilden, dass es einem Benutzer gestattet ist, in einfacher Weise, ohne Zuhilfenahme zusätzlicher Gerätschaften und gegebenenfalls ohne seine grundsätzliche Fahrposition verlassen zu müssen, seine Relativlage bezüglich des Fahrzeugs zu verändern.

Diese Aufgabe wird dadurch gelöst, dass eine Verbindung der Arbeitsräume durch ein äußeres Betätigungselement steuerbar ist und dass eine Verbindungseinrichtung zum automatischen Trennen der Arbeitsräume nach Verschiebung des Kolbens um einen vorbestimmten Federweg vorgesehen ist.

Bei einer Federvorrichtung mit einem kompressiblen Medium können, ausgehend von der den normalen Federweg zur Verfügung stellenden, ausgefederten Position, die Arbeitsräume der Federvorrichtung also mittels des außen an der Federvorrichtung angeordneten Betätigungselements verbunden werden, wodurch bei Belastung der Federvorrichtung mit zumindest einem Teil des Körpergewichts des Benutzers die Federvorrichtung einfedert.

Nach Verschiebung des Kolbens um zumindest einen vorbestimmten Federweg werden die Arbeitsräume sodann automatisch getrennt, so dass der Federweg nunmehr verkürzt ist und in seiner eingefederten Lage durch die erneute Betätigung des Betätigungselements und die damit verbundene aktive Trennung der Arbeitsräume verharrt. Der Federweg der Federvorrichtung wird auf diese Weise verkürzt, während der oberhalb des Rades und der Federvorrichtung befindliche Fahrzeugteil samt Körperteilen des Benutzer, also beispielsweise Lenker samt Armen und Oberkörper des Benutzers, ihre Relativlage ändern und sich in einer bodennäheren Position befinden. Ein anschließendes erneutes Betätigen des Betätigungselements unter Entlastung der Federvorrichtung lässt diese in den ausgefederten ursprünglichen Zustand zurückkehren.

Vorteilhafterweise ist zur Herstellung eines vergrößerten Arbeitsvolumens auf Seiten der Kolbenstange bei einer Weiterbildung der Vorrichtung die Kolbenstange mit einer Innenhöhlung versehen, welche mit dem Kolbenstangenraum über eine in der Seitenwand der Kolbenstange angeordnete Durchtrittsöffnung verbunden ist, so dass das Medium zwischen der Innenhöhlung der Kolbenstange und dem Kolbenstangenraum durch diese Durchtrittsöffnung hindurchtreten kann und beide Räume den entsprechenden Arbeitsraum bilden.

Zur Gewährleistung einer sicheren Verbindung der beiden Arbeitsräume weist bei einer anderen vorteilhaften Ausführungsform der Vorrichtung die Verbindungseinrichtung ein festes, in dem Kolbenraum mit dem einen Endbereich des Zylinders verbundenes Ende und ein freies, in den Kolbenstangenraum eingreifendes Ende auf. Um das freie Ende der Verbindungseinrichtung bei den stattfindenden Federvorgängen sicher zu führen kann es zweckmäßigerweise bei einer Weiterbildung vorgesehen sein, in der Innenhöhlung der Kolbenstange ein Begrenzungsrohr anzuordnen, in dessen stirnseitige Öffnung das freie Ende der Verbindungseinrichtung dichtend eingreift.

Eine besonders gut herzustellende und zuverlässige Verbindungseinrichtung wird bei einer bevorzugten Ausführungsform der Vorrichtung dadurch realisiert, dass die Verbindungseinrichtung als zur Längsachse des Zylinders paralleles, insbesondere koaxiales, in dem Kolben dichtend geführtes Verbindungsrohr ausgebildet ist. Damit die Volumina der Arbeitsräume miteinander kommunizieren können, weist bei einer besonders bevorzugten Ausführungsform der Vorrichtung die Verbindungseinrichtung in ihrem in dem Kolbenstangenraum befindlichen Abschnitt an ihren Wandungen wenigstens eine Durchtrittsöffnung für das Medium auf, so dass bei Öffnung entsprechender Sperrorgane zwischen den mit dem Medium befüllten Arbeitsräumen über die Verbindungseinrichtung ein Druckausgleich stattfinden kann. Zur Realisierung unterschiedlicher Verstellungen des Federwegs können an der Verbindungseinrichtung auch mehrere, einzeln verschließbare Durchtrittsöffnungen vorgesehen sein.

Nach dem Befüllen der Federvorrichtung mit dem Medium bei hergestellter Verbindung zwischen Arbeitsräumen wird diese Verbindung getrennt und die Federvorrichtung ist einsatzbereit. Bei einem durch einen Stoß ausgelösten Federvorgang federt die Federvorrichtung ein, das heißt, der Druck in dem dem Kolbenraum zugeordneten Arbeitsraum vergrößert sich, während er in dem dem Kolbenstangenraum zugeordneten Arbeitsraum abnimmt. Die hierdurch verursachten Kräfte wirken dem auslösenden Stoß entgegen und stellen das Gleichgewicht zwischen den Arbeitsräumen wieder her. Soll nun der Federweg aus den vorstehend bereits erwähnten Gründen reduziert werden, so wird über das äußere Betätigungselement eine Verbindung der Volumina der Arbeitsräume hergestellt, durch die anschließende Belastung der Federvorrichtung etwa mit dem Körpergewicht des Benutzers findet solange ein Volumenaustausch der beiden Volumina über das Verbindungsrohr der Verbindungseinrichtung statt, bis die Durchtrittsöffnung der Verbindungseinrichtung, deren freies Ende ja in dem Begrenzungsrohr geführt ist, die Dichtung dieses Begrenzungsrohrs überfährt und auf diese Weise die beiden Volumina automatisch getrennt werden. Ein weiteres Einfedern der Federvorrichtung führt dabei nicht zu einem weiteren Druckausgleich und das relativ kleine Volumen des Verbindungsrohrs, welches bei geöffneter Verbindung zwischen den Arbeitsräumen dem Volumen des Kolbenraums zugeordnet ist, hat praktisch keinen Einfluss auf die Druckverhältnisse. Die aktive Trennung der Volumina an dem Betätigungselement führt dazu, dass sich durch die unterschiedlichen Flächen auf der Kolbenseite und der Kolbenstangenseite ein anderes Kräftegleichgewicht einstellt, in dem die Gabel ausfedert. Gegenüber dem ursprünglichen Federweg ist der jetzt zur Verfügung stehende wie gewünscht reduziert.

Um zu einem späteren Zeitpunkt wieder den vollen Federweg zur Verfügung zu haben, wird unter gleichzeitiger Entlastung der Federvorrichtung das Betätigungselement erneut betätigt und dadurch die Arbeitsräume erneut verbunden. Durch die unterschiedlichen Flächen auf Kolben- und Kolbenstangenseite sowie das Gewicht des an der Federvorrichtung angreifenden Rades federt die Federvorrichtung wieder voll aus, wodurch nach erneuter Betätigung des äußeren Betätigungselements und damit verbundener Trennung der Arbeitsräume wieder der gesamte Federweg der Federvorrichtung zur Verfügung steht.

Um den Ein- und/oder Ausfedervorgang für den Benutzer der Federvorrichtung noch komfortabler zu gestalten kann es bei einer anderen Ausführungsform vorgesehen sein, dass zwischen dem Kolben und einer der Stirnwände des Zylinders wenigstens ein weiteres, das Ein- und/oder Ausfedern der Federvorrichtung unterstützendes Federelement angeordnet ist, so dass die Federvorrichtung entweder bei Verbindung der Volumina auf ein gewünschtes Verkürzen oder Verlängern des Federwegs schneller reagiert oder aber auch insgesamt ein sensibleres Ansprechen der Federvorrichtung beim Auffangen von Stößen erreicht wird.

Um eine zuverlässige Verbindung und Trennung der Arbeitsräume zu gewährleisten und eine sichere Anordnung der Verbindungseinrichtung innerhalb der Federvorrichtung zu erreichen weist zweckmäßigerweise bei Weiterbildung der Erfindung der Zylinder in seinem dem Kolbenraum zugeordneten Endbereich eine Aufnahmeeinrichtung auf, welche das Betätigungselement sowie das feste Ende der Verbindungseinrichtung aufnimmt und diese miteinander verbindet.

Um die Volumina der beiden Arbeitsräume zuverlässig miteinander verbinden und wieder voneinander trennen zu können ist es bei einer weiteren Ausführungsform der erfindungsgemäßen Federvorrichtung vorgesehen, dass das Betätigungselement ein Sperrorgan aufweist, welches die Arbeitsräume verbindet oder trennt. Dieses kann beispielsweise durch ein Ventil gebildet sein, welches durch einen mit einer Dichtung versehenen Drehstift eine die Volumina verbindende Öffnung freigibt oder verschließt. Überdies bietet es sich bei einer anderen Ausführungsform an, das Betätigungselement gleichzeitig als Zugang zur Befüllung der Volumina mit dem Medium zu verwenden, weswegen hierfür das Betätigungselement mit einem von außen zugänglichen Ventil zur Befüllung der Arbeitsräume mit dem Medium versehen sein kann.

Zur zuverlässigen Auslösung des jeweils gewünschten Steuervorgangs durch den Benutzer weist bei einer weiteren Ausführungsform das Betätigungselement wenigstens ein an der äußeren Stirnseite des Zylinders angeordnetes Stellglied auf. Das Betätigungselement ist bei dieser Anordnung für den Benutzer gut und sicher erreichbar ohne dass er seine Position auf einem Zweirad verlassen müsste, so dass eine Veränderung des Federwegs auch während der Fahrt möglich ist.

Eine sinnvolle Weiterbildung kann darin bestehen, das Stellglied als kronenartigen, vorzugsweise mit Angriffshilfen versehenen Drehknopf oder Druckknopf auszubilden. Ein derartiger an der äußeren Stirnwand des Zylinders angeordneter kronenartiger Knopf ist für den Benutzer gut erreichbar und bedienbar, da er diesen lediglich drehen oder drücken muß um eine gewünschte Betätigung auszulösen. Die Bewegung des Stellgliedes unterstützende Angriffshilfen in der Art von Mulden oder Aussparungen an dem Knopf, erleichtern die Bedienung zusätzlich. Eine zusätzliche Bedienhilfe, die einen weiteren Komfortgewinn darstellt, weil der Benutzer sich dann nicht mehr zur Position des an der Stirnwandung des Zylinders hinbeugen muß, stellt bei einer sinnvollen Weiterbildung der Federvorrichtung ein Betätigungselement dar, welches wenigstens ein weiteres, von dem Zylinder beabstandet angeordnetes Stellglied aufweist. Diese Stellglied kann ein beispielsweise am Lenker eines Zweirades oder an dessen Vorbau angeordneter Knopf oder ein Drehring sein, der die Funktion des Betätigungselements ebenso zuverlässig auslöst, wie das an dem Zylinder angeordnete Stellglied. Bei dem am Lenker oder Vorbau angeordneten Stellglied handelt es sich um eine sogenannte Fernverstellung.

Hinsichtlich einer einfachen Bedienbarkeit der Federvorrichtung und um diese den Wünschen und Bedürfnissen des Benutzers einfach anpassen zu können ist es vorteilhaft, wenn bei einer Ausbildung der Federvorrichtung das Medium bevorzugt aus Stickstoff oder Luft besteht, da das eine ein inzwischen relativ unproblematisch verfügbares, inertes Gas darstellt, das andere Medium, nämlich Luft es dem Benutzer unter Verwendung eines häufig mitgeführten Pumpgerätes selbstständig und zu jeder Zeit gestattet, die Druckverhältnisse der Arbeitsräume, und damit die Federcharakteristik seinen Wünschen anzupassen.

Zur Kompensation der von der Federvorrichtung aufzunehmenden Stoßkräfte hat es sich im Sinne einer einfachen Herstellung und Serienfertigung als zweckmäßig erwiesen, eine Ausführungsform der Federvorrichtung mit einem Zylinder mit einem im wesentlichen kreisförmigen Querschnitt auszubilden, darüber hinaus sind aber, etwa wenn ungewöhnliche Querkräfte aufgefangen werden müssen, oder auch aus ästhetischen Gründen, auch Ausführungen der Federvorrichtungen denkbar, welche einen davon abweichenden, beispielsweise elliptischen oder vieleckigen Querschnitt aufweisen.

Aufgrund der sich anbietenden Kombination von Federvorrichtungen mit Dämpfungsvorrichtungen in einer an dem Fahrzeugrad angeordneten Einheit ist eine Ausbildung der Federvorrichtung besonders bevorzugt, bei welcher diese ein Teil eines Gabelbeins einer insbesondere für ein Zweirad vorgesehenen Gabel zum Halten des Rads ist, und bei welcher zur Schwingungsdämpfung an dem anderen Gabelbein dieser Gabel ein vorzugsweise als Gasdämpfer ausgebildeter Dämpfer angeordnet ist. Auf diese Weise kann dem Benutzer der Federvorrichtung, da er durch den Einsatz einfacher Hilfsmittel in der Lage ist, die Charakteristiken der Feder- und Dämpfungseinrichtungen selbst zu beeinflussen, ein optimaler Fahrkomfort mit seinem Fahrzeug garantiert werden, der praktisch zu jeder Zeit an die jeweiligen Umgebungsbedingungen anpassbar ist.

Die Erfindung wird nachstehend an einem Ausführungsbeispiel anhand der Figuren in den Zeichnungen näher erläutert.

Es zeigen, teilweise in schematisierter Darstellung:
- Fig.1: eine Seitenansicht eines Ausführungsbeispiels einer erfindungsgemäßen Federvorrichtung mit verstellbarem Federweg in ausgefedertem Zustand bei geschlossener Verbindung der beiden Arbeitsräume;
- Fig.2: eine Seitenansicht einer Federvorrichtung aus der Fig.1 in eingefedertem Zustand bei geöffneter Verbindung der beiden Arbeitsräume;
- Fig.3: eine detailliertere Ansicht eines Abschnitts einer Federvorrichtung in dem Zustand der Fig.2; und die
- Fig.4: eine teilweise aufgebrochene Draufsicht auf eine Federvorrichtung als Teil eines Gabelbeins einer für ein Zweirad vorgesehenen Gabel.

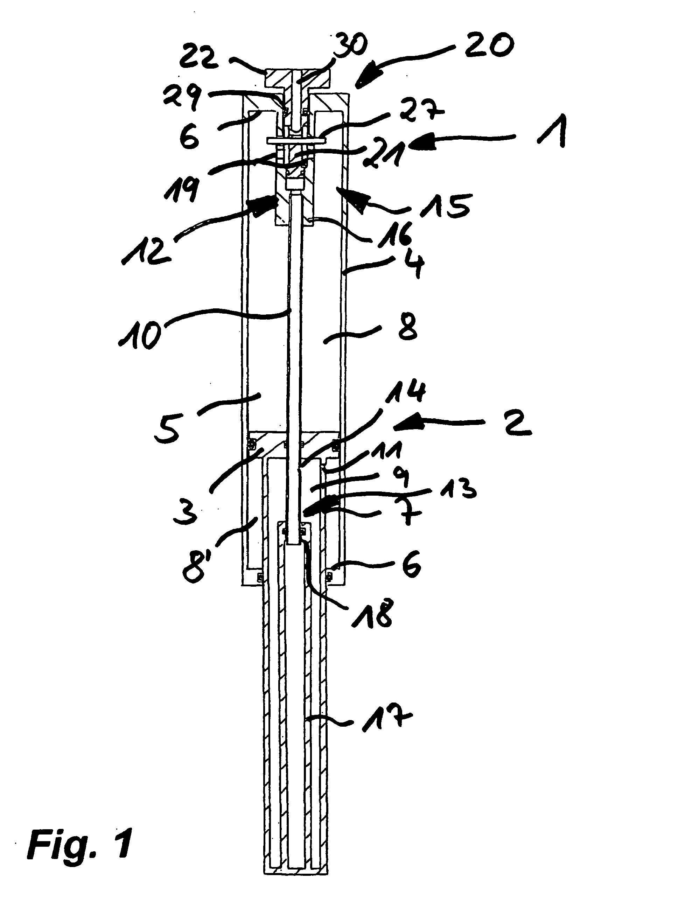

In den Fig.1 bis 4 ist als Ausführungsbeispiel eine im Ganzen mit 1 bezeichnete pneumatische Federvorrichtung zur Begrenzung der Stossantwort eines Fahrzeugrades zu erkennen. Zunächst auf die Fig.1 Bezug nehmend, in welcher die Federvorrichtung 1 in ihrem vollständig ausgefederten Zustand und nicht verbundenen Arbeitsvolumina 8, 8' dargestellt ist, weist die Federvorrichtung 1 eine Kolben-Zylinder-Anordnung 2 auf, welche mit einem in einer Innenhöhlung 5 des mit einem im wesentlichen kreisförmigen Querschnitt versehenen Zylinders 4 axial verschiebbar gelagerten Kolben 3 versehen ist. Der Zylinder 4 ist an seinen einander abgewandten Endbereichen durch einen in einem festen Abstand zueinander angeordneten Stirnwandungen 6 verschlossen, wobei der Kolben 3 mit einer eine der Stirnwandungen 6 durchsetzenden und in dieser dichtend geführten Kolbenstange 7 verbunden ist. Beiderseits des Kolbens 3 sind durch den Kolben 3 voneinander abgegrenzte Arbeitsräume bzw. -volumina 8, 8' als Kolbenraum 8 und Kolbenstangenraum 8' gebildet, welche mit einem kompressiblen Medium gefüllt sind. Die Arbeitsräume 8, 8' sind durch eine Verbindungseinrichtung 10 miteinander verbindbar. Zur komfortablen Verstellung des Federwegs der Federvorrichtung 1 und damit einhergehend der Einstellung einer von der hier dargestellten unterschiedlichen Relativposition des Kolbens 3 und des Zylinders 4 ist die Verbindung der Arbeitsräume 8, 8' durch ein äußeres Betätigungselement 20 steuerbar und die Verbindungseinrichtung 10 trennt die Arbeitsräume 8, 8' nach Verschiebung des Kolbens 3 um wenigstens einen vorbestimmten Federweg automatisch.

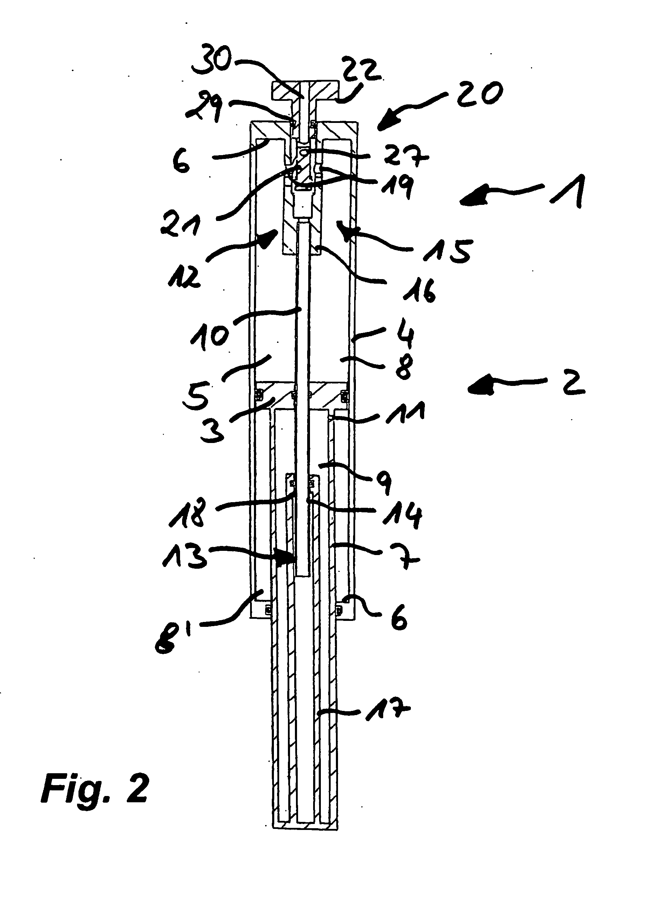

Weiterhin ist den Fig.1 und 2 entnehmbar, dass die Kolbenstange 7 mit einer Innenhöhlung 9 versehen ist, welche mit dem Kolbenstangenraum 8' über eine in der Seitenwand der Kolbenstange 7 angeordnete Durchtrittsöffnung 11 verbunden ist, so dass die beiden Räume gemeinsam den Arbeitsraum 8' bilden und das Medium über die Durchtrittsöffnung 11 den gesamten Arbeitsraum 8' ausfüllt. Innerhalb der Innenhöhlung 9 der Kolbenstange 7 befindet sich ein sich über den größeren Teil der Länge der Kolbenstange erstreckendes, wiederum zu den Längsachsen des Zylinders 4 und der Kolbenstange 7 koaxiales Begrenzungsrohr 17, welches an seinem dem Kolben 3 zugewandten Ende eine Öffnung 18 aufweist, in welche das freie Ende 13 der Verbindungseinrichtung 10 dichtend eingreift.

Die Verbindungseinrichtung 10 ist als zur Längsachse des Zylinders 4 paralleles, koaxiales, in dem Kolben 3 dichtend geführtes Verbindungsrohr 10 ausgebildet. Das Verbindungsrohr 10 weist ein festes, im dem Kolbenraum 8 mit dem Endbereich des Zylinders 4 verbundenes Ende 12 und ein freies, in den Kolbenstangenraum 8' eingreifendes Ende 13 auf. An ihrem in dem Kolbenstangenraum befindlichen Abschnitt hat die Verbindungseinrichtung 10 an dessen Wandung eine Durchtrittsöffnung 14 für das Medium. Zur Festlegung der Verbindungseinrichtung 10 in dem Zylinder 4 und deren Anschluss an die Betätigungseinrichtung 20 ist die Federvorrichtung 1 mit einer Aufnahmeeinrichtung 15 versehen. Diese ist als zu der Längsachse des Zylinders 4 koaxiales zylindrisches Anschlussstück 16 ausgebildet und nimmt in einer nicht genauer dargestellten, dem Kolben 3 zugewandten Öffnung das feste Ende der durch das Verbindungsrohr 10 gebildeten Verbindungseinrichtung 10 auf. An dem dem Kolben 3 abgewandten Ende befindet sich das Betätigungselement 20, welches durch ein Sperrorgan 21 in Art eines Ventils in Verbindung mit einem an der äußeren Stirnseite des Zylinders 4 angeordneten Stellglied 22 in der Lage ist, die Verbindung der beiden Arbeitsräume 8, 8' und damit der Volumina zu steuern.

Während die Fig.1 die Federvorrichtung 1 in ausgefedertem Zustand zeigt, ist die Federvorrichtung in der Fig.2 im eingefederten Zustand zu erkennen. In nicht betätigter Position sperrt in der Fig.1 das Sperrorgan 21 die Durchtrittsöffnung 19, welche die Verbindung zwischen dem Arbeitsraum 8 und dem Verbindungsrohr 10 herstellt. Gleichzeitig sind durch die Durchtrittsöffnungen 11 und 14 die Innenhöhlung 9 der Kolbenstange 7 und der Kolbenstangenraum 9 zum Arbeitsraum 8' verbunden, wobei in diesem Zustand das Volumen des Verbindungsrohrs 10 ebenfalls diesem Arbeitsraum 8' zugeordnet ist. Eine Betätigung des Betätigungselements 20, durch händische Verstellung des Stellglieds 22, wie in der Fig.2 zu erkennen, gibt die Durchtrittsöffnung 19 frei und verbindet die beiden Arbeitsräume 8, 8' so dass zwischen diesen ein Druckausgleich stattfinden kann. Bei gleichzeitiger Belastung der Federvorrichtung 1 aus Richtung des Betätigungselements 20 taucht der Kolben 3 durch eine nicht weiter dargestellte Abstützung tiefer in den Zylinder 4 ein. Hierbei wird das freie Ende 13 des Verbindungsrohrs weiter in den Innenbereich des Begrenzungsrohrs 17 verfahren, und zwar so weit, bis bei dieser Bewegung die Durchtrittsöffnung 14 des Verbindungsrohrs 10 die dichtend verschlossene Öffnung 18 des Begrenzungsrohrs 17 überfährt und hierdurch die Verbindung der Arbeitsräume automatisch getrennt wird. Zu diesem Zeitpunkt ist das Volumen des Verbindungsrohrs aufgrund der an dem Betätigungselement 20 freigegebenen Verbindung dem Arbeitsraum 8 zugeordnet. Im Ergebnis ist durch diesen Vorgang der Federweg der Federvorrichtung 1 um einen vorbestimmten Betrag, beispielsweise um ein Viertel des Gesamtfederwegs reduziert worden. Je nach Ausbildung der Vorrichtung sind hier auch ein oder mehrere andere Reduktionsbeträge möglich.

Eine anschließende Betätigung an dem Betätigungselement 20 führt zu einer aktiven Trennung der Arbeitsräume 8, 8' so dass in der Folge die Federvorrichtung in der eingefederten, nur einen begrenzten Federweg zur Verfügung stellenden Position verbleibt. Erst eine erneute Öffnung des Sperrorgans 21 an dem Betätigungselement 20 erlaubt der Federvorrichtung 1 unter Entlastung in den ausgefederten Zustand zurückzukehren.

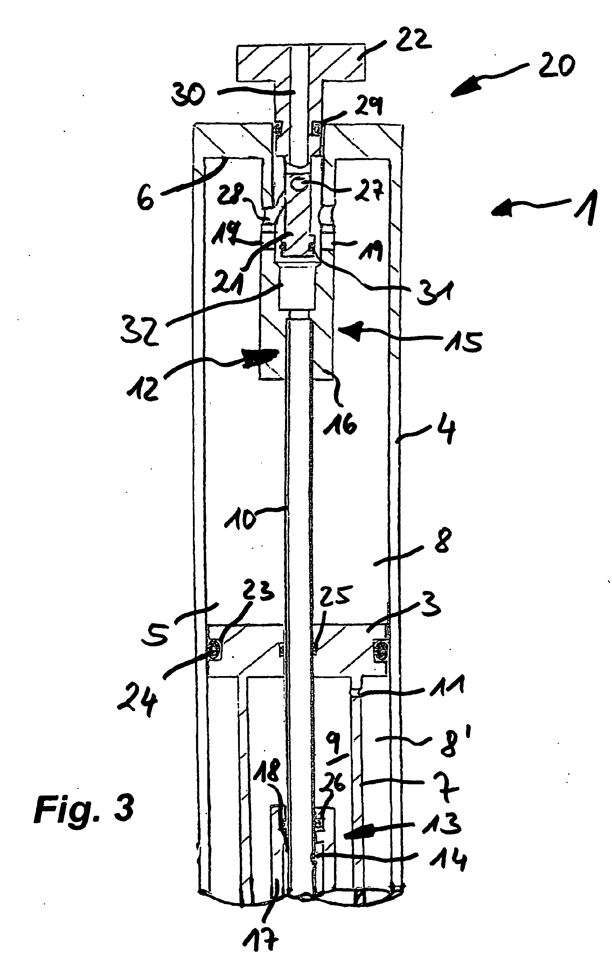

Die Fig.3 zeigt einen Ausschnitt des in Fig.2 dargestellten Zustands der Federvorrichtung 1, so dass auch auf die vorstehenden Ausführungen zu dieser Figur verwiesen wird. Besser zu erkennen ist in dieser Figur die dichtende Führung des Kolbens 3 in dem Zylinder 4 mit seiner in einer Umfangsnut 23 angeordneten Dichtung 24, die dichtende Führung des Verbindungsrohrs 10 in dem Kolben mit einer Dichtung 25, sowie die ebenfalls dichtende Führung des freien Endes 13 des Verbindungsrohrs 10 in der Öffnung 18 des Begrenzungsrohrs 17 mittels der dort befindlichen Dichtung 26. Außerdem ist in der Fig.3 die Funktionsweise des Betätigungselements 20 detailgenauer dargestellt. Das Stellglied 22 ist als kronenartiger Drehknopf an der äußeren Seite der Stirnwandung 6 angeordnet, ein weiteres, von dem Zylinder beabstandet angeordnetes Stellglied ist nicht gezeigt. Eine Betätigung des Betätigungselements 20 an dem Stellglied 22 hebt den flanschartigen Deckel desselben weiter von der Außenseite der Stirnwandung 6 ab, während das zapfenartige, in der Aufnahmeeinrichtung 15 aufgenommene Endstück des Deckels weiter aus der Aufnahmeeinrichtung 15 hinausgeführt wird, wobei eine Dichtung 29 für eine gasdichte Abgrenzung des Innenraums sorgt. Eine das Stellglied 22 durchgreifende Zuführung 30 ist mit einem nicht weiter dargestellten Ventil versehen, so dass die Arbeitsräume 8, 8' der Federvorrichtung 1 von außen befüllt werden können. Das Stellglied 22 ist außerdem mit dem als Ventilstift ausgebildeten Sperrorgan 21 verbunden, welches wiederum von einem Führungsstift 27 durchsetzt ist. Dieser gleitet in einer gekrümmten Kulissenführung 28, so dass die Bewegung des Betätigungselements reproduzierbar zwangsgeführt stattfindet. Eine schon erwähnte Betätigung des Betätigungselements 20 zur Freigabe der Verbindung zwischen den Arbeitsräumen 8, 8' lässt dabei den Führungsstift 27 in der Kulissenführung 28 nach oben fahren, wodurch das dem Kolben 3 zugewandte Ende des Sperrorgans 21 aus seinem erneut durch eine Dichtung abgedichteten Sperrsitz im Eintrittsbereich 32 des festen Endes 12 des Verbindungsrohrs abgehoben wird und derart die Verbindung der Arbeitsräume 8, 8' der Federvorrichtung 1 etabliert und ein Austausch des Mediums zwischen den Arbeitsräumen 8, 8' gestattet wird.

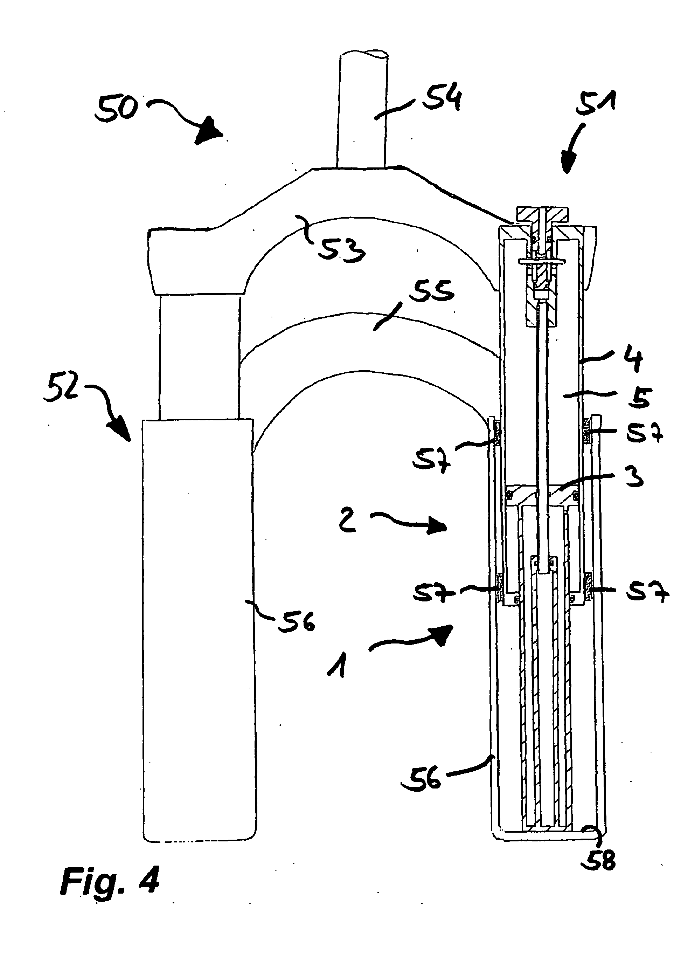

Die Fig. 4 zeigt schließlich zur besseren Übersichtlichkeit eine Anordnung der Federvorrichtung 1 als ein Teil eines Gabelbeins 51 einer insbesondere für ein Zweirad vorgesehenen Gabel 50 zum Halten des betreffenden, hier nicht gezeigten Rads, welches mit seiner Nabe an der Gabel 50 mit einer ebenfalls nicht gezeigten Nabenaufnahme gehalten ist. Zur Schwingungsdämpfung ist an dem anderen Gabelbein 52 dieser Gabel 50 ein nicht weiter dargestellter, vorzugsweise als Gasdämpfer, Reibdämpfer, Öldämpfer oder dergleichen ausgebildeter Dämpfer angeordnet. Außerdem weist die Gabel 50 die die Gabelbeine 51, 52 verbindende Gabelbrücke 53, und von dieser abgehend das Schaftrohr 54 auf, welches die Verbindung mit dem Rahmen eines Zweirads herstellt. Zur Stabilisierung kann zwischen den Gabelbeinen 51, 52 zusätzlich vorzugsweise mindestens ein bogenförmig gekrümmter Stabilisator 55 angeordnet sein. Gut zu erkennen ist, dass jedes der Gabelbeine 51, 52 mit je einem Tauchrohr 56 versehen ist, in welche ein sogenanntes Standrohr eintaucht. Im Fall der erfindungsgemäßen Federvorrichtung 1 wird dieses Standrohr durch den Zylinder 4 der Kolben-Zylinder-Anordnung 2 gebildet. Bei einem Federvorgang taucht das Standrohr in das Tauchrohr 56 ein, wobei es hierfür an zwischen den Rohren angeordneten Gleitlagern 57 gelagert ist. Überdies kann der Fig.4 entnommen werden, dass sich der Boden der Kolbenstange 7, der einen gemeinsamen Boden mit dem Begrenzungsrohr 17 aufweist, beim Eintauchen des Zylinders 4 in das Tauchrohr 56 am Boden 58 des Tauchrohrs 56 abstützen kann.

Demnach betrifft die vorstehend beschriebene Erfindung also eine Feder- und/oder Dämpfervorrichtung, die im Ausführungsbeispiel als pneumatische Federvorrichtung 1 ausgebildet ist. Sie dient zur Begrenzung der Stossantwort eines Fahrzeugrades mit wenigstens einer Kolben-Zylinder-Anordnung 2, welche einen in einer Innenhöhlung 5 des Zylinders 4 axial verschiebbar gelagerten Kolben 3 aufweist, wobei der Zylinder 4 an seinen einander abgewandten Endbereichen durch einen in einem festen Abstand zueinander angeordneten Stirnwandungen 6 verschlossen ist, wobei der Kolben 3 mit einer eine der Stirnwandungen 6 durchsetzenden und in dieser dichtend geführten Kolbenstange 7 verbunden ist, wobei beiderseits des Kolbens 3 durch den Kolben 3 voneinander abgegrenzte Arbeitsräume 8, 8' als Kolbenraum 8 und Kolbenstangenraum 8' gebildet sind, welche mit einem kompressiblen Medium gefüllt sind und wobei die Arbeitsräume 8, 8' durch eine Verbindungseinrichtung 10 miteinander verbindbar sind. Einem Benutzer der genannten Federeinrichtung 1 wird durch die Änderung des Federwegs der Federvorrichtung 1 eine den Gegebenheiten des Terrains angepasste, komfortable und vordefinierte Lageänderung eines Fahrzeugteils, insbesondere des Vorbaus mit Lenker, dadurch gestattet, dass die Verbindung der Arbeitsräume 8, 8' durch ein äußeres Betätigungselement 20 steuerbar ist und dass die Verbindungseinrichtung 10 die Arbeitsräume 8, 8' nach Verschiebung des Kolbens 3 um wenigstens einen vorbestimmten Federweg automatisch trennt.

Im Ausführungsbeispiel ist die Anwendung der Erfindung anhand einer konventionellen Teleskopgabel gezeigt. Alternativ kann die Erfindung auch bei sogenannten Upside-Down-Teleskopgabeln angewandt werden. Die Erfindung beschränkt sich jedoch nicht nur auf die Anwendung bei Teleskopgabel, sondern es ist auch denkbar, jede Bauart von Feder- und/oder Dämpferelementen, das heißt, Federgabeln, Dämpfer, Federbeine und dergleichen gemäß der Erfindung auszustatten.

## Patentansprüche

1. Feder- und/oder Dämpfervorrichtung (1) insbesondere für Zweiräder, mit wenigstens einer Kolben-Zylinder-Anordnung (2), wobei durch den Kolben (3) voneinander abgegrenzte Arbeitsräume (8, 8') als Kolbenraum (8) und Kolbenstangenraum (8') gebildet sind, welche mit einem Feder- oder Dämpfungsmedium gefüllt sind, wobei der Kolben (3) mit einer Kolbenstange (7) verbunden ist, die eine Stirnwandung (6) des Kolbenstangenraums (8') dichtend durchsetzt, wobei eine Verbindung der Arbeitsräume (8, 8') durch ein äußeres Betätigungselement (20) steuerbar ist und **dadurch gekennzeichnet, dass** eine Verbindungseinrichtung (10) zum automatischen Trennen der Arbeitsräume (8, 8') nach Verschiebung des Kolbens (3) um einen vorbestimmten Federweg vorgesehen ist.

2. Federvorrichtung nach Anspruch 1, **dadurch gekennzeichnet, dass** die Kolbenstange (7) mit einer Innenhöhlung (9) versehen ist, welche mit dem Kolbenstangenraum (8') über eine in der Seitenwand der Kolbenstange (7) angeordnete Durchtrittsöffnung (11) verbunden ist.

3. Federvorrichtung nach Anspruch 1 oder 2, **dadurch gekennzeichnet, dass** die Verbindungseinrichtung (10) ein festes, in dem Kolbenraum (8) mit dem einen Endbereich des Zylinders verbundenes Ende (12) und ein freies, in den Kolbenstangenraum (8') eingreifendes Ende (13)aufweist.

4. Federvorrichtung nach Anspruch 3, **dadurch gekennzeichnet, dass** in der Innenhöhlung (9) der Kolbenstange (7) ein Begrenzungsrohr (17) angeordnet ist, in dessen stirnseitige Öffnung (18) das freie Ende (13) der Verbindungseinrichtung (10) dichtend eingreift.

5. Federvorrichtung nach einem der vorhergehenden Ansprüche, **dadurch gekennzeichnet, dass** die Verbindungseinrichtung (10) als zur Längsachse des Zylinders (4) paralleles, insbesondere koaxiales, in dem Kolben (3) dichtend geführtes Verbindungsrohr ausgebildet ist.

6. Federvorrichtung nach einem der vorhergehenden Ansprüche, **dadurch gekennzeichnet, dass** die Verbindungseinrichtung (10) in ihrem in dem Kolbenstangenraum (8') befindlichen Abschnitt an ihren Wandungen wenigstens eine Durchtrittsöffnung (14) für das Medium aufweist.

7. Federvorrichtung nach einem der vorhergehenden Ansprüche, **dadurch gekennzeichnet, dass** zwischen dem Kolben (3) und einer der Stirnwände (6) des Zylinders (4) wenigstens ein weiteres, das Ein- und/oder Ausfedern der Federvorrichtung (1) unterstützendes Federelement angeordnet ist.

8. Federvorrichtung nach einem der vorhergehenden Ansprüche, **dadurch gekennzeichnet, dass** der Zylinder (4) in seinem dem Kolbenraum (8) zugeordneten Endbereich eine Aufnahmeeinrichtung (15) aufweist, welche das Betätigungselement (20) sowie das feste Ende (12) der Verbindungseinrichtung (10) aufnimmt und diese miteinander verbindet.

9. Federvorrichtung nach einem der vorhergehenden Ansprüche, **dadurch gekennzeichnet, dass** das Betätigungselement (20) ein Sperrorgan (21) aufweist, welches die Arbeitsräume (8, 8') verbindet oder trennt.

10. Federvorrichtung nach einem der vorhergehenden Ansprüche, **dadurch gekennzeichnet, dass** das Betätigungselement (20) mit einem von außen zugänglichen Ventil zur Befüllung der Arbeitsräume (8, 8') mit dem Medium versehen ist.

11. Federvorrichtung nach einem der vorhergehenden Ansprüche, **dadurch gekennzeichnet, dass** das Betätigungselement (20) wenigstens ein an der äußeren Stirnseite des Zylinders (4) angeordnetes Stellglied (22) aufweist.

12. Federvorrichtung nach Anspruch 11, **dadurch gekennzeichnet, dass** das Stellglied (22) als kronenartiger, vorzugsweise mit Angriffshilfen versehener, Drehknopf oder Druckknopf ausgebildet ist.

13. Federvorrichtung nach Anspruch 11 oder 12, **dadurch gekennzeichnet, dass** das Betätigungselement (20) wenigstens ein weiteres, von dem Zylinder (4) beabstandet angeordnetes Stellglied aufweist.

14. Federvorrichtung nach einem der vorhergehenden Ansprüche, **dadurch gekennzeichnet, dass** das zum Federn und/oder Dämpfen fungierende Medium bevorzugt aus Stickstoff oder Luft besteht.

15. Federvorrichtung nach einem der vorhergehenden Ansprüche, **dadurch gekennzeichnet, dass** der Zylinder (4) einen im wesentlichen kreisförmigen Querschnitt aufweist.

16. Gabel, insbesondere für ein Zweirad zum Halten des Rads, mit einer Federvorrichtung nach einem der Ansprüche 1 bis 15, welche Federvorrichtung ein Teil eines Gabelbeins (51) ist, und **dadurch gekennzeichnet, dass** zur Schwingungsdämpfung an dem anderen Gabelbein (52) dieser Gabel (50) ein vorzugsweise als Gas-, Öl- oder Reibdämpfer ausgebildeter Dämpfer angeordnet ist.

## Claims

1. Spring and/or damper device (1), in particular for two-wheelers, comprising at least one piston-cylinder arrangement (2), wherein work chambers (8, 8') separated from each other by the piston (3) are formed as piston chamber (8) and piston rod chamber (8'), which are filled with a cushioning or damping medium, wherein the piston (3) is connected to a piston rod (7) which sealingly intersperses a front wall (6) of the piston rod chamber (8'), wherein a connection of the work chambers (8, 8') is controllable via an outer actuation member (20), and **characterized by** providing a connecting unit (10) for automatically separating the work chambers (8, 8') after moving the piston (3) by a predetermined spring travel.

2. The spring device according to claim 1, **characterized in that** the piston rod (7) is provided with an inner cavity (9) which is connected to the piston rod chamber (8') via an opening (11) arranged in the side wall of the piston rod (7).

3. The spring device according to claim 1 or 2, **characterized in that** the connection unit (10) has a fixed end (12) connected in the piston chamber (8) to one end region of the cylinder and a free end (13) engaging the piston rod chamber (8').

4. The spring device according to claim 3, **characterized in that** in the inner cavity (9) of the piston rod (7) a confinement pipe (17) is arranged, the front side opening (18) of which is sealingly engaged by the free end (13) of the connection unit (10).

5. The spring device according to any of the preceding claims, **characterized in that** the connection unit (10) is made as a connection pipe which is parallel, in particular coaxial, to the longitudinal axis of the cylinder (4) and is sealingly guided in the piston (3).

6. The spring device according to any of the preceding claims, **characterized in that** the connection unit (10) has at least one opening (14) for the medium in the section disposed in the piston rod chamber (8') on the walls thereof.

7. The spring device according to any of the preceding claims, **characterized in that** at least one further spring member supporting the compression and/or extension of the spring device (1) is arranged between the piston (3) and one of the front walls (6) of the cylinder (4).

8. The spring device according to any of the preceding claims, **characterized in that** the cylinder (4) has a receiving unit (15) in the end region assigned to the piston chamber (8), said receiving unit receiving and interconnecting the actuation member (20) and the fixed end (12) of the connection unit (10).

9. The spring device according to any of the preceding claims, **characterized in that** the actuation member (20) has a blocking means (21) which connects or separates the work chambers (8, 8').

10. The spring device according to any of the preceding claims, **characterized in that** the actuation member (20) is provided with an externally accessible valve for filling the work chambers (8, 8') with the medium.

11. The spring device according to any of the preceding claims, **characterized in that** the actuation member (20) has at least one actuator (22) arranged on the outer front side of the cylinder (4).

12. The spring device according to claim 11, **characterized in that** the actuator (22) is designed as a crown-like turning knob or push button, preferably provided with contact aids.

13. The spring device according to claim 11 or 12, **characterized in that** the actuation member (20) has at least one further actuator arranged at a distance from the cylinder (4).

14. The spring device according to any of the preceding claims, **characterized in that** the medium serving for cushioning and/or damping preferably consists of nitrogen or air.

15. The spring device according to any of the preceding claims, **characterized in that** the cylinder (4) has a substantially circular cross-section.

16. A fork, in particular for a two-wheeler for holding the bicycle, comprising a spring device according to any of claims 1 to 15, which spring device is part of the fork leg (51), and **characterized in that** a damper preferably designed as a gas, oil or friction damper is arranged on the other fork leg (52) of said fork (50) for vibration damping.

## Revendications

1. Dispositif de suspension et/ou d'amortissement (1), en particulier pour bicyclette, comprenant au moins un agencement à piston-et-cylindre (2), dans lequel des chambres de travail (8, 8') séparées l'une de l'autre sont formées par le piston (3), sous forme d'une chambre de piston (8) et d'une chambre de tige de piston (8'), lesquelles sont remplies avec un fluide de suspension ou d'amortissement, dans lequel le piston (3) est relié à une tige de piston (7) qui traverse de manière étanche une paroi frontale (6) de la chambre de tige de piston (8'), et dans lequel une liaison des chambres de travail (8, 8') est susceptible d'être commandée par un élément d'actionnement extérieur (20), et **caractérisé en ce qu'**il est prévu un moyen de liaison (10) pour la séparation automatique des chambres de travail (8, 8') après déplacement du piston (3) d'une course de débattement prédéterminée.

2. Dispositif de suspension selon la revendication 1, **caractérisé en ce que** la tige de piston (7) est pourvue d'une cavité intérieure (9) qui est reliée à la chambre de tige de piston (8') via une ouverture traversante ménagée dans la paroi latérale de la tige de piston (7).

3. Dispositif de suspension selon la revendication 1 ou 2, **caractérisé en ce que** le moyen de liaison (10) comporte une extrémité fixe (12) reliée à l'une des zones terminales du cylindre dans la chambre de piston (8), et une extrémité libre (13) qui s'engage dans la chambre de tige de piston (8').

4. Dispositif de suspension selon la revendication 3, **caractérisé en ce qu'**un tube de limitation (17) est agencé dans la cavité intérieure (9) de la tige de piston (7), tel que l'extrémité libre (13) du moyen de liaison (10) s'engage de manière étanche dans l'ouverture frontale (18) dudit tube.

5. Dispositif de suspension selon l'une des revendications précédentes, **caractérisé en ce que** le moyen de liaison (10) est réalisé sous la forme d'un tube de liaison parallèle à l'axe longitudinal du cylindre (4), en particulier coaxial, guidé de façon étanche dans le piston (3).

6. Dispositif de suspension selon l'une des revendications précédentes, **caractérisé en ce que** le moyen de liaison (10) comprend, dans son tronçon qui se trouve dans la chambre de tige de piston (8'), au moins une ouverture traversante (4) pour le fluide, sur ses parois.

7. Dispositif de suspension selon l'une des revendications précédentes, **caractérisé en ce qu'**au moins un autre élément de suspension qui assiste le débattement en contraction et/ou en extension du dispositif de suspension (1) est agencé entre le piston (3) est l'une des parois frontales (6) du cylindre (4).

8. Dispositif de suspension selon l'une des revendications précédentes, **caractérisé en ce que** le cylindre (4) comprend, dans sa zone terminale associée à la chambre de piston (8), un moyen de réception (15) qui reçoit l'élément d'actionnement (20) ainsi que l'extrémité fixe (12) du moyen de liaison (10) et qui les relie l'un à l'autre.

9. Dispositif de suspension selon l'une des revendications précédentes, **caractérisé en ce que** l'élément d'actionnement (20) comprend un organe de fermeture (21), qui relie ou qui sépare les chambres de travail (8, 8').

10. Dispositif de suspension selon l'une des revendications précédentes, **caractérisé en ce que** l'élément d'actionnement (20) est doté d'une vanne accessible de l'extérieur pour le remplissage des chambres de travail (8, 8') avec le fluide.

11. Dispositif de suspension selon l'une des revendications précédentes, **caractérisé en ce que** l'élément d'actionnement (20) comprend au moins un organe de positionnement (22) agencé sur la face frontale extérieure du cylindre (4).

12. Dispositif de suspension selon la revendication 11, **caractérisé en ce que** l'organe de positionnement (22) est réalisé sous la forme d'un bouton rotatif ou d'un bouton-poussoir semblable à couronne, de préférence pourvu d'accessoires d'agrippement.

13. Dispositif de suspension selon la revendication 11 ou 12, **caractérisé en ce que** l'élément d'actionnement (20) comprend au moins un autre organe de positionnement agencé à distance du cylindre (4).

14. Dispositif de suspension selon l'une des revendications précédentes, **caractérisé en ce que** le fluide utilisé pour la suspension et/ou l'amortissement est de préférence de l'azote ou de l'air

15. Dispositif de suspension selon l'une des revendications précédentes, **caractérisé en ce que** le cylindre (4) présente une section transversale sensiblement circulaire.

16. Fourche, en particulier pour une bicyclette, destinée à maintenir une roue, comprenant un dispositif de suspension selon l'une des revendications 1 à 15, ledit dispositif de suspension faisant partie d'un bras de fourche (51), et **caractérisé en ce qu'**un amortisseur, réalisé de préférence comme amortisseur à gaz, à huile ou à friction, est agencé sur l'autre bras de fourche (52) de cette fourche (50) pour l'amortissement des oscillations.
